# EUROPEAN PATENT SPECIFICATION

(11) **EP 2 640 002 B1**
(45) Date of publication and mention of the grant of the patent: **09.03.2016**
(21) Application number: 11852464.4
(22) Date of filing: 26.12.2011
(51) Int. Cl.: H04L 12/24

(54) **METHOD, APPARATUS AND SYSTEM FOR CONFIGURING DEVICE**
VERFAHREN, VORRICHTUNG UND SYSTEM FÜR EINE GERÄTEKONFIGURIERUNG
PROCÉDÉ, APPAREIL ET SYSTÈME PERMETTANT DE CONFIGURER UN DISPOSITIF

(30) Priority: 28.12.2010 CN 201010608778
(43) Date of publication of application: 18.09.2013
(73) Proprietor: Huawei Device Co., Ltd., Longgang District Shenzhen Guangdong 518129 (CN)
(72) Inventor: ZHAO, Junjie, Shenzhen Guangdong 518129 (CN); HE, Zhiqin, Shenzhen Guangdong 518129 (CN); WU, Huangwei, Shenzhen Guangdong 518129 (CN); ZHU, Yu, Shenzhen Guangdong 518129 (CN); ZHANG, Qinliang, Shenzhen Guangdong 518129 (CN)
(74) Representative: Pfenning, Meinig & Partner mbB
(86) International application number: PCT/CN2011/084605
(87) International publication number: WO 2012/089075

(56) References cited:
- EP-A1- 2 148 469
- EP-A2- 2 058 984
- WO-A1-2010/022898
- WO-A2-2010/030125
- CN-A- 1 866 855
- CN-A- 102 142 988
- UPNP FORUM: "UPnP Device Architecture 1.1", UPNP FORUM , 15 October 2008 (2008-10-15), pages I-VI,1, XP002562314, Retrieved from the Internet: URL:http://www.upnp.org/specs/arch/UPnP-ar ch-DeviceArchitecture-v1.1.pdf [retrieved on 2010-01-08]

## Description

### FIELD OF THE INVENTION

The present invention relates to the communication field, and in particular, to a method, an apparatus, and a system for configuring a device.

### BACKGROUND OF THE INVENTION

With the development of embedded technologies, there are increasingly more classes of terminal devices, such as personal computers, printers, gateways, and mobile devices. A Universal Plug and Play, abbreviated as "UPnP", protocol allows terminal devices on a local network to discover each other and establish basic network services, such as data sharing, communication, and entertainment. Therefore, the UPnP protocol is widely supported by terminal device.

Managing terminal devices on a local network remotely in a centralized manner may effectively improve the management efficiency of terminal devices and reduce the management cost of terminal devices. PD-174 of the Broadband Forum, Broadband Forum, proposes a proxy management model, which allows non-TR-069 terminal devices to be managed remotely through the TR-069 protocol, including terminal devices supporting the UPnP protocol. A gateway provides a proxy for a terminal device, and ensures that an auto-configuration server, Auto-Configuration Server, abbreviated as "ACS", may transparently control the terminal device. In addition, the gateway provides a protocol conversion mechanism. A TR-069 command of the ACS, after passing through the gateway, is converted into a UPnP command for controlling the terminal device. Therefore, the terminal device may be configured and managed by the ACS, without the necessity of implementing the TR-069 protocol.

At present, the UPnP protocol is implemented by both the gateway and the terminal device. The gateway works as a UPnP control point, and the terminal device works as a UPnP device. The gateway performs configuration according to terminal device information. The process is generally as follows: Firstly, the terminal device sends a device announcement message to the gateway; after receiving the device announcement message, the gateway sends an HTTP GET request to the terminal device, requesting to obtain the device description and service description of the terminal device; the terminal device returns the device description and service description of the terminal device to the gateway by responding to the GET request; then the gateway sends a UPnP query command multiple times to the terminal device to obtain various information of the terminal device; the terminal device returns various current information of the terminal to the gateway according to parameters of these query commands; and finally, the gateway configures the terminal device according to the obtained current information of the terminal device. When the device notification message sent by the terminal device expires or the terminal device goes online again, the preceding interaction process between the gateway and the terminal device is continued to configure the terminal device.

Because the terminal device sends a device announcement message periodically, every time the gateway receives a device announcement message, the gateway needs to perform a device discovery, receiving the device notification message of the terminal device, and description, obtaining the device description and service description of the terminal device, process, and invokes a UPnP action to obtain various information of the terminal device, such as service capabilities. Therefore, the process of configuring the terminal device by the gateway is complex, and the efficiency of configuring the terminal device by the gateway is low.

WO2010030125 discloses a unified device management method and system for unified management of a fixed and mobile device includes a command execution controller which receives a device management command, sends a query message to the device, receives a response message transmitted by the device, creates a command execution policy based on the settings contained in the response message, and executes the device management command according to a policy, the device which generates and sends the response message to the command execution controller according to user inputs, and a remote access server which connects the device and the command execution controller by using a remote access protocol.

UPnP Device Architecture 1.1 relates UPnP technology and defines the protocols for communication between controller, or control points and devices.

### SUMMARY OF THE INVENTION

Embodiments of the present invention provide a method, an apparatus, and a system for configuring a device, so as to optimize the solution for configuring a terminal device by the gateway and improve the efficiency of configuring the terminal device by the gateway.

In one aspect, an embodiment of the present invention provides a method for configuring a device. The method includes:
receiving a configuration template sent by a configuration server, wherein the configuration template comprises a terminal device matching rule, configuration information corresponding to the terminal device matching rule, and a service configuration identifier corresponding to the terminal device matching rule;
receiving a device announcement message sent periodically by a terminal device, where the device announcement message carries terminal device information of the terminal device, and the terminal device information includes first information identifying current service configuration of the terminal device;
based on the first information, determining(S230) that the terminal device needs to be configured; and
configuring the terminal device based on the configuration template and the first information,
wherein the determining that the terminal device needs to be configured comprises:
   determining that the first information is null; or
   determining that the first information is an initial configuration request identifier;
   wherein the configuring the terminal device comprises:
      based on the terminal device information and the terminal device matching rule, determining(S240) a first terminal device matching rule which is comprised in the terminal device matching rule and matches the terminal device;
      sending(S250) first configuration information which is comprised in the configuration information and corresponds to the first terminal device matching rule to the terminal device; or,
wherein the determining that the terminal device needs to be configured comprises:
   based on the terminal device information and the terminal device matching rule, detennining(S340) a first terminal device matching rule which is comprised in the terminal device matching rule and matches the terminal device;
   determining(S350) that a first service configuration identifier, in the service configuration identifier, corresponding to the first terminal device matching rule is inconsistent with the first information;
   wherein the configuring the terminal device comprises:
      sending(S360) first configuration information which is comprised in the configuration information and corresponds to the first terminal device matching rule to the terminal device.

In another aspect, an embodiment of the present invention provides an apparatus for configuring a device. The apparatus includes:
a first receiving module, adapted to receive a configuration template sent by a configuration server;
a second receiving module, adapted to receive a device announcement message sent periodically by a terminal device, where the device announcement message carries terminal device information of the terminal device, and the terminal device information includes first information identifying current service configuration of the terminal device; and
a configuring module, adapted to configure the terminal device based on the configuration template and the first information,
wherein the apparatus further comprises:
   a determining module(730), adapted to determine that the terminal device needs to be configured;
   wherein the determining module comprises:
      a first determining unit(731), adapted to determine that the first information is null; or
      a second determining unit(732), adapted to determine that the first information is an initial configuration request identifier,
   wherein the configuring module (740)comprises:
      a third determining unit(741), adapted to determine, based on the terminal device information and the configuration template, a first terminal device matching rule which is comprised in the configuration template and matches the terminal device;
   a first sending unit(742), adapted to send first configuration information which is comprised in the configuration template and corresponds to the first terminal device matching rule to the terminal device; or,
wherein the determining module(830) comprises:
   a fourth determining unit(831), adapted to determine, based on the terminal device information and the configuration template, a first terminal device matching rule which is comprised in the configuration template and matches the terminal device;
   a fifth determining unit(832), adapted to determine that a first service configuration identifier which is comprised in the configuration template and corresponds to the first terminal device matching rule is inconsistent with the first information;
   wherein, the configuring module(840) comprises:
      a second sending unit(841), adapted to send first configuration information which is comprised in the configuration template and corresponds to the first terminal device matching rule to the terminal device.

Based on the above technical solutions, the method, apparatus, and system in the embodiments of the present invention, by using the technical means of carrying terminal device information in a device announcement message, can simplify the interaction process between the gateway and the terminal device for the gateway to obtain terminal device information, thereby overcoming the problem of the complex process and low efficiency in the prior art, and achieving the technical effects of optimizing the solution for configuring the terminal device by the gateway and improving the efficiency of configuring the terminal device by the gateway.

### BRIEF DESCRIPTION OF THE DRAWINGS

To describe the technical solutions in the embodiments of the present invention more clearly, the following briefly introduces the accompanying drawings required for describing the embodiments. Apparently, the accompanying drawings in the following descriptions show merely some of the embodiments of the present invention, and persons of ordinary skill in the art may still derive other drawings from the accompanying drawings without creative efforts.
FIG. 1 is a schematic diagram of a method for configuring a device according to an embodiment of the present invention;
FIG. 2 is a schematic diagram of a method for configuring a device according to another embodiment of the present invention;
FIG. 3 is a schematic diagram of a method for configuring a device according to still another embodiment of the present invention;
FIG. 4 is a flowchart of a method for configuring a device according to still another embodiment of the present invention;
FIG. 5 is a schematic diagram of an apparatus for configuring a device according to an embodiment of the present invention;
FIG. 6 is a schematic diagram of an apparatus for configuring a device according to another embodiment of the present invention;
FIG. 7 is a schematic diagram of an apparatus for configuring a device according to still another embodiment of the present invention; and
FIG. 8 is a schematic diagram of a system for configuring a device according to an embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention.

It is obvious that the described embodiments are merely a part rather than all of the embodiments of the present invention. All other embodiments obtained by persons of ordinary skill in the art based on the embodiments of the present invention without creative efforts shall fall within the protection scope of the present invention.

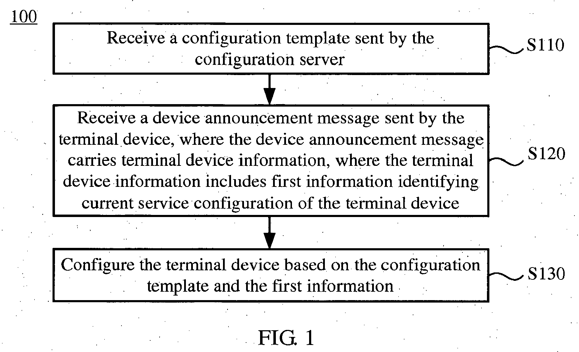

FIG. 1 is a schematic diagram of a method 100 for configuring a device according to an embodiment of the present invention. The method 100 may be applied to a configuration server for managing a UPnP terminal device through a gateway proxy.

In step S110, the gateway receives a configuration template sent by the configuration server. The configuration template may include a terminal device matching rule including at least one matching condition. If the terminal device satisfies all matching conditions of a matching rule, it indicates that the terminal device satisfies the matching rule; otherwise, it indicates that the terminal device does not satisfy the matching rule. The configuration template may further include configuration information corresponding to the terminal device matching rule, and a service configuration identifier corresponding to the terminal device matching rule.

The terminal device matching rule may further include a requirement for a port connected with the terminal device, a requirement for a capability of the terminal device, a requirement for the type of the terminal device, a requirement for the manufacturer of the terminal device, a requirement for the serial number of the terminal device, a requirement for the software of the terminal device, or a requirement for the hardware of the terminal device, or any combination of the matching conditions.

In step S120, the gateway receives a device announcement message sent by the terminal device, where the device announcement message carries terminal device information of the terminal device, and the terminal device information includes first information identifying current service configuration of the terminal device. Therefore, the device announcement message not only is used for device announcement so that the gateway discovers the device, but also carries terminal device information so that the terminal device actively sends the related information to the gateway, so as to simplify the process of obtaining the information related to the terminal device by the gateway.

In addition to the first information, the device announcement message may further carry second information identifying a capability of the terminal device, third information identifying the type of the terminal device, fourth information identifying the manufacturer of the terminal device, fifth information identifying the serial number of the terminal device, sixth information identifying the software of the terminal device, or seventh information identifying the hardware of the terminal device, or any combination thereof.

In step S130, the gateway configures the terminal device based on the received configuration template and the first information.

The method in the embodiment of the present invention, by carrying terminal device information in a device announcement message, can simplify the interaction process between the gateway and the terminal device for the gateway to obtain terminal device information, thereby optimizing the solution for configuring the terminal device by the gateway and improving the efficiency of configuring the terminal device by the gateway.

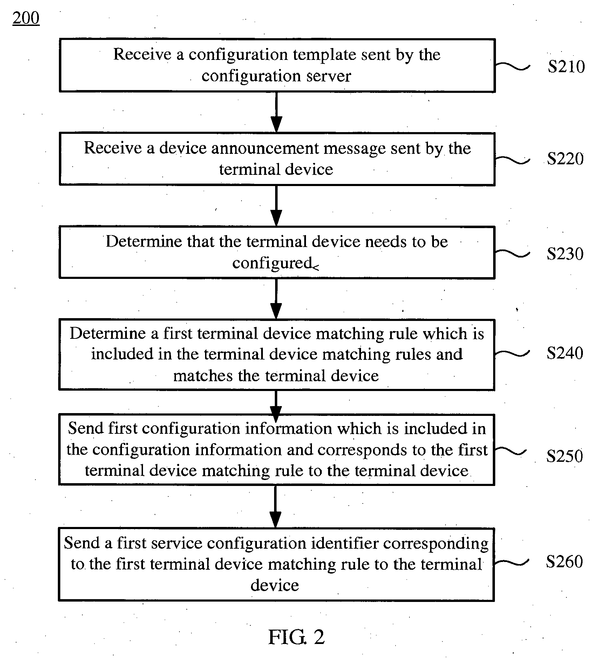

FIG. 2 is a schematic diagram of a method 200 for configuring a device according to another embodiment of the present invention. The method 200 shows in detail the process of configuring a terminal device by a gateway.

In step S210, the gateway configures a configuration template sent by the server; in step S220, the gateway receives a device announcement message sent by the terminal device. Steps S210 and S220 are similar to the related process in the method 100, and are not further described herein for brevity.

In step S230, the gateway determines that the terminal device needs to be configured. The gateway may determine, in multiple ways, that the terminal device needs to be configured. For example, after receiving the device announcement message sent by the terminal device, the gateway detects the first information included in the device announcement message and identifying current service configuration of the terminal device, and when determining that the first information is null, that is, the terminal device has no current service configuration, the gateway may determine that the current terminal device needs to be configured. When the gateway determines that the first information identifying current service configuration of the terminal device is an initial configuration request identifier, the gateway may also determine that the current terminal device needs to be configured.

In another embodiment of the present invention, when the gateway can determine, according to the terminal device information carried in the device announcement message and a terminal device matching rule included in the configuration template, that the terminal device matches the terminal device matching rule, and can determine that the service configuration identifier included in the configuration template is inconsistent with the first information carried in the device announcement message, it indicates that the terminal service configuration is changed, and the gateway may also determine that the current terminal device needs to be configured, which will be described in detail hereinafter.

After determining that the terminal device needs to be configured, the gateway may firstly determine a first terminal device matching rule which matches the terminal device, among the terminal device matching rule included in the configuration template sent by the configuration server, as shown in step S240. To determine the first terminal device matching rule, the gateway may obtain a port number of a port connected with the terminal device, and then according to the port number, the terminal device information, and the configuration template, determine the first terminal device matching rule which matches the terminal device.

Next, the gateway may query all configuration information which is included in the configuration template and corresponds to the terminal device matching rule to obtain the first configuration information corresponding to the first terminal device matching rule, and send the first configuration information to the terminal device, as shown in step S250. At this time, the process of configuring the terminal device by the gateway is ended.

In the embodiment of the present invention, because the first information identifying the current service configuration of the terminal device is null, or the first information is an initial configuration request identifier, after the gateway sends the first configuration information to the terminal device, the gateway may further determine, based on the first terminal device matching rule, a first service configuration identifier which corresponds to the first terminal device matching rule, among all service configuration identifiers in the configuration template, and send the first service configuration identifier to the terminal device, as shown in step S260.

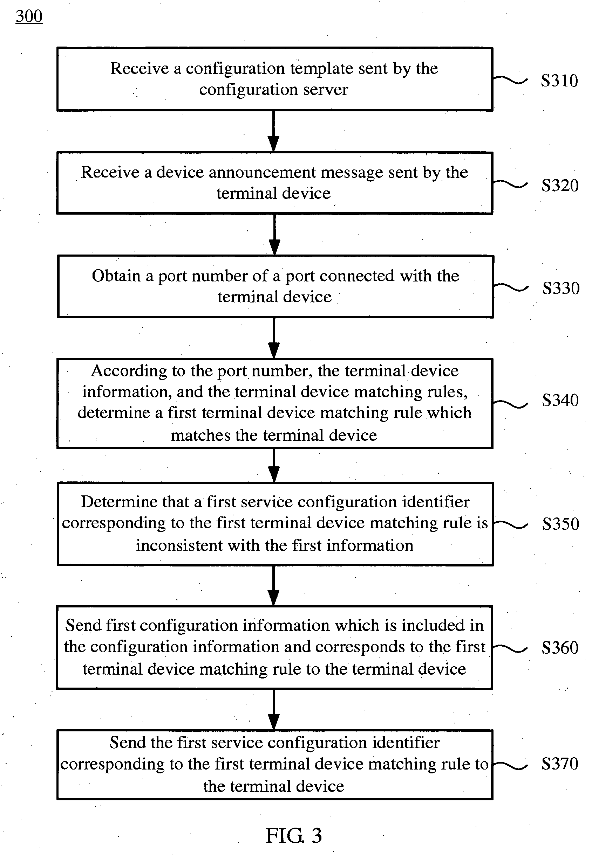

FIG. 3 is a schematic diagram of a method 300 for configuring a device according to still another embodiment of the present invention. The method 300 describes in detail the process of configuring the terminal device by the gateway when the gateway determines that a first service configuration identifier corresponding to a first terminal device matching rule is inconsistent with second information.

In step S310, the gateway receives a configuration template sent by the configuration server, where the configuration template includes a terminal device matching rule, configuration information corresponding to the terminal device matching rule, and a service configuration identifier corresponding to the terminal device matching rule.

In step S320, the gateway receives a device announcement message sent by the terminal device, where the device announcement message carries terminal device information of the terminal device, and the terminal device information includes first information identifying current service configuration of the terminal device; the terminal device information may further include at least one of second information identifying the capability of the terminal device, third information identifying the type of the terminal device, fourth information identifying the manufacturer of the terminal device, fifth information identifying the serial number of the terminal device, sixth information identifying software of the terminal device, or seventh information identifying hardware of the terminal device.

In step S330, the gateway obtains a port number of a port connected with the current terminal device, and then according to the port number, the terminal device information, and the terminal device matching rule, determines a first terminal device matching rule which matches the terminal device, among all terminal device matching rules included in the configuration template, as shown in step S340.

In step S350, the gateway may determine, based on the first terminal device matching rule, a first service configuration identifier corresponding to the first terminal device matching rule, and compares the first service configuration identifier with the first information carried in the device announcement message, and when the gateway determines that the first service configuration identifier is inconsistent with the first information, it indicates that the terminal device needs to be configured. Then the gateway sends first configuration information which is included in the configuration template and corresponds to the first terminal device matching rule to the terminal device, as shown in step S360.

After the gateway configures the terminal device, the gateway determines that the first service configuration identifier is inconsistent with the first information, which indicates that the current service configuration of the terminal device is changed. Therefore, in step S370, the gateway may further send a first service configuration identifier which is included in the configuration template and corresponds to the first terminal device matching rule to the terminal device.

The method in the embodiment of the present invention, by carrying terminal device information in a device announcement message, can simplify the interaction process between the gateway and the terminal device for the gateway to obtain terminal device information, thereby optimizing the solution for configuring the terminal device by the gateway and improving the efficiency of configuring the terminal device by the gateway.

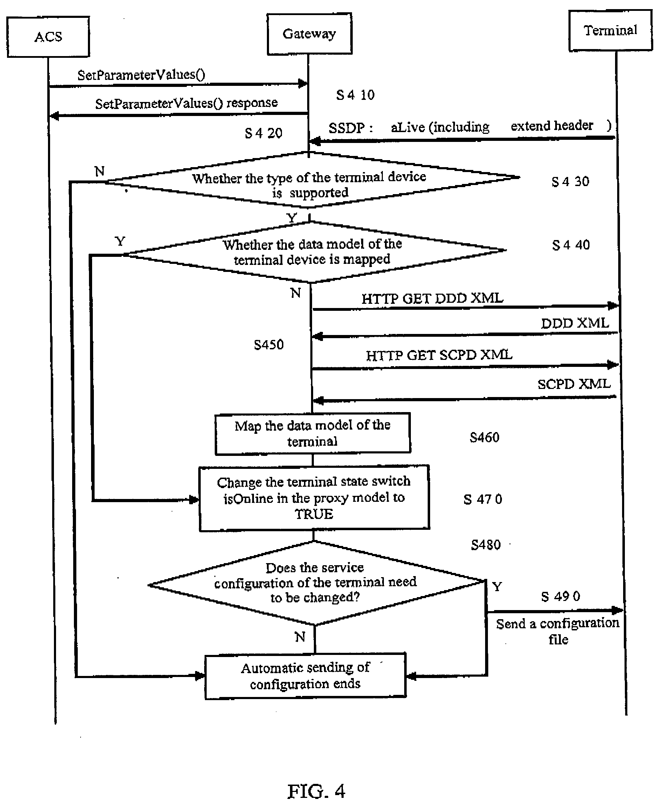

FIG. 4 is a flowchart of a method 400 for configuring a device according to still another embodiment of the present invention. The following describes in detail a method 400 for configuring a device according to an embodiment of the present invention by using the flowchart shown in FIG. 4 as an example.

After the gateway is online, the ACS may send a configuration template to the gateway through a TR-069 RPC method, as shown in step S410. The gateway receives a SetParameterValues() request sent by the ACS, and responds to the request. After the terminal device is online, the terminal device sends a device announcement message (ssdp:alive message) to the gateway periodically, where the device announcement message carries one or more pieces of terminal device information in the first information to the seventh information described in methods 100, 200, and 300. The seven pieces of terminal device information are respectively carried in seven extended fields after the ssdp:alive message header is extended, where the format of the extended field names is "identifier. domain name", where the domain name must be the domain name of the manufacturer. For example, Table 1 shows seventh extended field names and the description thereof.

**Table 1**

| **Extended Field Name** | **Description** |
|---|---|
| PRODUCTCLASS. HUAWEI.COM | Identifies the service capability of the terminal device, for example, WLANAP (wireless local area network access point) -2.4G or WLANAP-5.8G. |
| PROVISIONINGCODE.HUAWELCOM | Identifies the current service configuration of the terminal device, such as WLANAP-2.4G. |
| DEVICEMODEL.HUAWEI.COM | Identifies the type of the terminal device, such as the STB (set top box) and AP (access point). |
| MANUFACTUREROUI.HUAWEI.COM | Uniquely Identifies the manufacturer of the terminal device. |
| SERIALNUMBER.HUAWELCOM | Identifies the serial number of the terminal device. |
| SOFTWAREVERSION.HUAWEI.COM | Identifies the version number of software of the terminal device. |
| HARDWAREVERSION.HUAWEI.COM | Identifies the version number of hardware of the terminal device. |

After the gateway receives the ssdp:alive message sent by the terminal device, in step S430, the gateway judges, according to the third information in the extended field DEVICEMODEL.HUAWEI.COM, whether the gateway supports the type of the terminal device, and if the gateway supports the type of the terminal device, the device configuration process proceeds to step S440; otherwise, the device configuration process ends.

Next, in step S440, the gateway judges whether the data model of the terminal device is mapped. The gateway may query proxied device nodes in the gateway, and based on this, determine whether, among the proxied device nodes, there is a terminal device node whose terminal device manufacturer and terminal device serial number are respectively the same as the fourth information and the fifth information carried in the extended fields MANUFACTUREROUI.HUAWEI.COM and SERIALNUMBER.HUAWEI.COM. If the above terminal device node exists among the proxied device nodes, it indicates that the gateway has mapped the data model for the terminal device. In this case, the device configuration process proceeds to step S470; otherwise, the device configuration process proceeds to step S450.

In step S450, the gateway firstly sends an HTTP GET request to the terminal device, requesting the device description and service description of the terminal device; and receives the DDD XML, device description document of the Extensible Markup Language, and SCPD XML, service control protocol description of the Extensible Markup Language, sent by the terminal device in response to the HTTP GET request, thereby obtaining the device description and service description of the terminal device. Next, the gateway maps the data model of the terminal device based on the device description and the service description, as shown in step S460.

After the gateway determines that the data model of the terminal device has been mapped or maps the data model of the terminal device based on the device description and the service description, the gateway changes the terminal device state switch isOnline in the gateway proxy data model to TRUE, as shown in step S470. Next, in step S480, the gateway judges whether the service configuration of the terminal device is changed. The gateway may obtain the port number AttachedPort of the port connected with the terminal device, query a service state table in the gateway by using the AttachedPort and the third information, fourth information, fifth information, first information, sixth information, and seventh information respectively carried in the following six extended fields: DEVICEMODEL.HUAWEI.COM, MANUFACTUREROUI.HUAWEI.COM, SERIALNUMBER.HUAWEI.COM, PRODUCTCLASS. HUAWEI.COM, SOFTWAREVERSION.HUAWEI.COM, and HARDWAREVERSION.HUAWEI.COM, and obtain a service configuration identifier corresponding to a terminal device matching rule. The gateway compares the service configuration identifier with the first information carried in the extended field PROVISIONINGCODE.HUAWEI.COM; if the service configuration identifier is consistent with the first information, it indicates that the service is not changed, and the device configuration process ends; otherwise, if the service configuration identifier is inconsistent with the first information, it indicates that the service is changed, and the gateway sends configuration information corresponding to the terminal device matching rule to the terminal device, as shown in step S490. If the configuration file sent by the gateway includes the service configuration identifier obtained by querying the service state table, it is unnecessary to separately invoke the UPnP command to write the service configuration identifier into the data model of the terminal device; otherwise, the gateway needs to separately invoke the UPnP command to write the service configuration identifier into the data model of the terminal device. Up to now, the device configuration process ends.

The service state table in the gateway may include eight fields: DeviceModel, ManufacturerOUI, SerialNumber, ProductClass, SoftwareVersion, HardwareVersion, AttachedPort, and ProvisioningCode. The mapping relationships between the eight fields and the terminal device information carried in the terminal device announcement message are shown in Table 2.

**Table 2**

| **Secvice State Table Field** | **Extended Field Name** |
|---|---|
| ProductClass | PRODUCTCLASS. HUAWEI.COM |
| ProvisioningCode | PROVISIONINGCODE.HUAWEI.COM |
| DeviceModel | DEVICEMODEL.HUAWEI.COM |
| ManufacturerOUI | MANUFACTUREROUI.HUAWEI.COM |
| SerialNumber | SERIALNUMBER.HUAWEI.COM |
| Software Version | SOFTWAREVERSION.HUAWEI.COM |

| **Service State Table Field** | **Extended Field Name** |
|---|---|
| HardwareVersion | HARDWAREVERSION.HUAWEI.COM |
| AttachedPort | |

The service state table includes ProvisioningCode service configuration values of the terminal device in different states. When the fields ManufacturerOUI, SerialNumber, ProductClass, Software Version, DeviceModel, and HardwareVersion in the service state table are all the same, but AttachedPort is different, ProvisioningCode service configuration values may be different. For example, Table 3 shows the terminal device service state table.

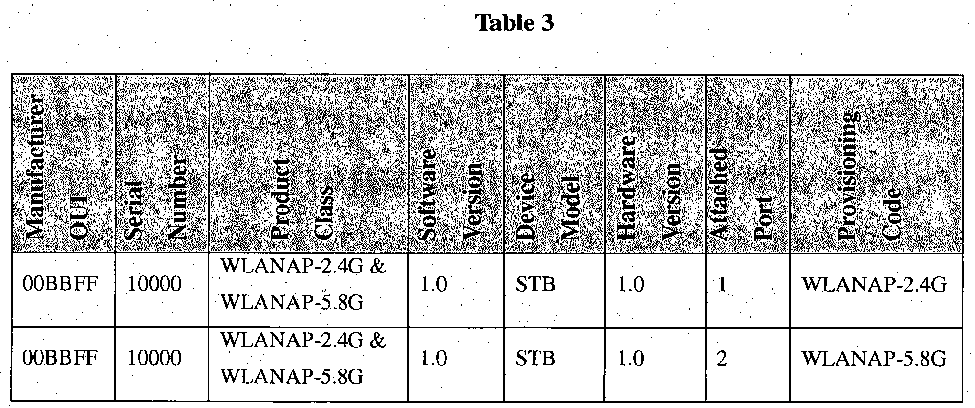

The method in the embodiment of the present invention, by carrying terminal device information in a device announcement message, can simplify the interaction process between the gateway and the terminal device for the gateway to obtain terminal device information, thereby optimizing the solution for configuring the terminal device by the gateway and improving the efficiency of configuring the terminal device by the gateway.

The following describes the apparatus and system for configuring a device according to embodiments of the present invention.

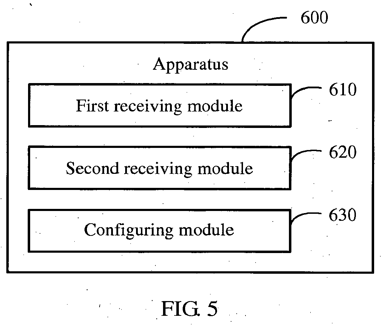

FIG. 5 is a schematic diagram of an apparatus 600 for configuring a device according to an embodiment of the present invention. As shown in FIG. 5, the apparatus 600 includes a first receiving module 610, a second receiving module 620, and a configuring module 630. The first receiving module 610 may be adapted to receive a configuration template sent by a configuration server; the second receiving module 620 may be adapted to receive a device announcement message sent by a terminal device, where the device announcement message carries terminal device information of the terminal device, and the terminal device information includes first information identifying current service configuration of the terminal device; and the configuring module 630 may be adapted to configure the terminal device based on the configuration template and the first information.

The configuration template may include a terminal device matching rule including at least one matching condition, configuration information corresponding to the terminal device matching rule, and a service configuration identifier corresponding to the terminal device matching rule. If the terminal device satisfies all matching conditions of a matching rule, it indicates that the terminal device satisfies the matching rule; otherwise, it indicates that the terminal device does not satisfy the matching rule. The terminal device information may further include at least one of second information identifying a capability of the terminal device, third information identifying a type of the terminal device, fourth information identifying the manufacturer of the terminal device, fifth information identifying a serial number of the terminal device, sixth information identifying software of the terminal device, or seventh information identifying hardware of the terminal device. The terminal device matching rule may include a requirement for a port connected with the terminal device and a requirement for a capability of the terminal device, and the terminal device matching rule may further include a requirement for the type of the terminal device, a requirement for the manufacturer of the terminal device, a requirement for the serial number of the terminal device, a requirement for the software of the terminal device, or a requirement for the hardware of the terminal device, or any combination of the matching conditions.

The foregoing and other operations and/or functions of the first receiving module 610, the second receiving module 620, and the configuring module 630 of the apparatus 600 are intended to implement the corresponding procedures of the methods 100, 200, 300, and 400 in FIG. 1 to FIG. 4 respectively, and are not further described herein for brevity.

The apparatus in the embodiment of the present invention, by carrying terminal device information in a device announcement message, can simplify the interaction process between the gateway and the terminal device for the gateway to obtain terminal device information, thereby optimizing the solution for configuring the terminal device by the gateway and improving the efficiency of configuring the terminal device by the gateway.

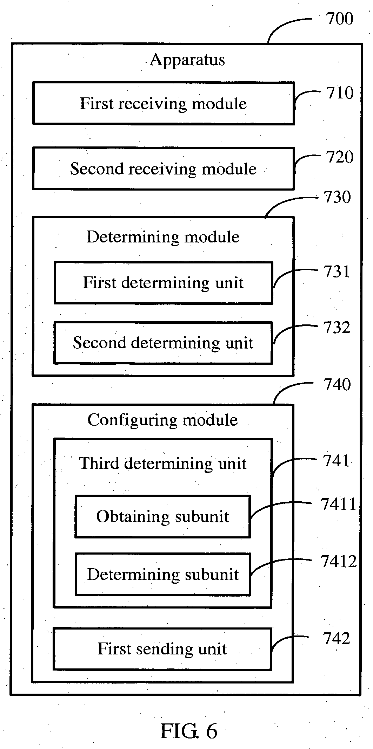

FIG. 6 is a schematic diagram of an apparatus 700 for configuring a device according to another embodiment of the present invention. In the embodiment shown in FIG. 6, the apparatus 700 includes a first receiving module 710, a second receiving module 720, a determining module 730, and a configuring module 740.

The determining module 730 may be adapted to determine that a terminal device needs to be configured. The determining module 730 may include a first determining unit 731, adapted to determine that first information is null, namely, the terminal device has no current service configuration, and at this time, the determining module 730 may determine that the current terminal device needs to be configured; the determining module 730 may further include a second determining unit 732, adapted to determine that the first information is an initial configuration request identifier, and at this time, the determining module 730 may also determine that the current terminal device needs to be configured.

The configuring module 740 may include a third determining unit 741 and a first sending unit 742. The third determining unit 741 is adapted to determine, based on the terminal device information and the configuration template, a first terminal device matching rule which matches the terminal device, among the terminal device matching rule included in the configuration template; the first sending unit 742 is adapted to send first configuration information which is included in the configuration template and corresponds to the first terminal device matching rule to the terminal device. In the embodiment of the present invention, the third determining unit 741 may include an obtaining subunit 7411 and a determining subunit 7412. The obtaining subunit 7411 may be adapted to obtain a port number of a port connected with the terminal device; and the determining subunit 7412 may be adapted to determine, according to the port number, the terminal device information, and the terminal device matching rule which are included in the configuration template, a first terminal device matching rule which matches the terminal device.

In the embodiment of the present invention, the apparatus 700 may further include a sending module, where the sending module is adapted to send a first service configuration identifier which is included in the configuration template and corresponds to the terminal device to the terminal device after the configuring module 740 configures the terminal device.

The foregoing and other operations and/or functions of the first receiving module 710, the second receiving module 720, the determining module 730, and the configuring module 740 of the apparatus 700 are intended to implement the corresponding procedures of the methods 100, 200, 300, and 400 in FIG. 1 to FIG. 4 respectively, and are not further described herein for brevity.

The apparatus in the embodiment of the present invention, by carrying terminal device information in a device announcement message, can simplify the interaction process between the gateway and the terminal device for the gateway to obtain terminal device information, thereby optimizing the solution for configuring the terminal device by the gateway and improving the efficiency of configuring the terminal device by the gateway.

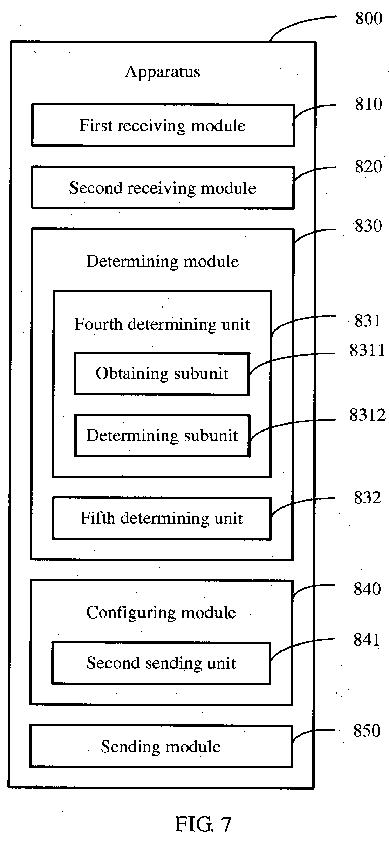

FIG. 7 is a schematic diagram of an apparatus 800 for configuring a device according to still another embodiment of the present invention. The first receiving module 810 and second receiving module 820 of the apparatus 800, and the second sending unit 841 of the configuring module 840 are respectively similar to the corresponding modules of the apparatus 700, and are not further described herein.

As shown in FIG. 7, the determining module 830 of the apparatus 800 may include a fourth determining unit 831 and a fifth determining unit 832. The fourth determining unit 831 may include an obtaining subunit 8311 and a determining subunit 8312. The obtaining subunit 8311 may be adapted to obtain a port number of a port connected with the terminal device; and the determining subunit 8312 may be adapted to determine, according to the port number, the terminal device information, and the terminal device matching rule which are included in the configuration template, a first terminal device matching rule which matches the terminal device. The fifth determining unit 832 may be adapted to determine that the first service configuration identifier is inconsistent with the first information; when the fifth determining unit 832 determines that the first service configuration identifier is inconsistent with the first information, the determining module 830 may also determine that the current terminal device needs to be configured.

In this embodiment, the configuring module 840 of the apparatus 800 includes a second sending unit 841. The second sending unit 841 sends the first configuration information which is included in the configuration template and corresponds to the first terminal device matching rule to the terminal device after the fifth determining unit 832 determines that the first service configuration identifier is inconsistent with the first information. In the embodiment of the present invention, the apparatus 800 may further include a sending module 850. The sending module 850 may be adapted to send the first service configuration identifier which is included in the configuration template and corresponds to the first terminal device matching rule to the terminal device after the configuring module 840 configures the terminal device, and is similar to the sending module in the apparatus 700.

The foregoing and other operations and/or functions of all modules, units, and subunits of the apparatus 800 are intended to implement the corresponding procedures of the methods 100, 200, 300, and 400 in FIG. 1 to FIG. 4 respectively, and are not further described herein for brevity.

The apparatus in the embodiment of the present invention, by carrying terminal device information in a device announcement message, can simplify the interaction process between the gateway and the terminal device for the gateway to obtain terminal device information, thereby optimizing the solution for configuring the terminal device by the gateway, and improving the efficiency of configuring the terminal device by the gateway.

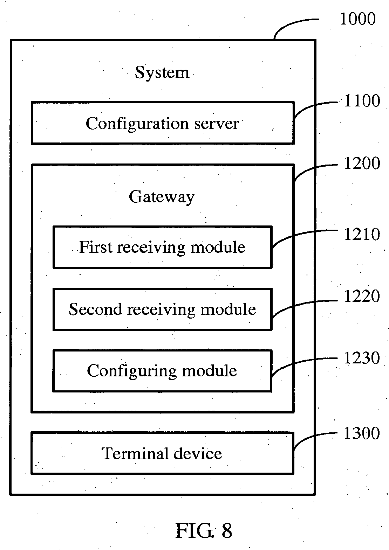

An embodiment of the present invention further provides a system for configuring a device, as shown in FIG. 8. FIG. 8 is a schematic diagram of a system 1000 for configuring a device according to an embodiment of the present invention. The system 1000 includes a configuration server 1100, a gateway 1200, and a terminal device 1300. The configuration server 1100 may be adapted to send a configuration template to the gateway 1200; the terminal device 1300 may be adapted to send a device announcement message to the gateway 1200, where the device announcement message carries terminal device information of the terminal device, and the terminal device information includes first information identifying current service configuration of the terminal device. The gateway 1200 may include a first receiving module 1210, a second receiving module 1220, and a configuring module 1230. The first receiving module 1210 may be adapted to receive the configuration template; the second receiving module 1220 may be adapted to receive the device announcement message; and the configuring module 1330 may be adapted to configure the terminal device 1300 based on the configuration template and the first information.

The foregoing and other operations and/or functions of the configuration server 1100, the gateway 1200, and the terminal device 1300 of the system 1000 are intended to implement the corresponding procedures of the methods 100, 200, 300, and 400 in FIG. 1 to FIG. 4 respectively, and are not further described herein for brevity.

The system in the embodiment of the present invention, by carrying terminal device information in a device announcement message, can simplify the interaction process between the gateway and the terminal device for the gateway to obtain terminal device information, thereby optimizing the solution for configuring the terminal device by the gateway and improving the efficiency of configuring the terminal device by the gateway.

The sequence numbers of the preceding embodiments of the present invention are merely for description purpose but do not indicate the preference of the embodiments.

Persons skilled in the art may understand clearly that the embodiments of the present invention may be implemented through software and an essential universal hardware platform. Base on such an understanding, the technical solutions in the embodiments of the present invention essentially, or the part contributing to the prior art may be implemented in the form of a software product. The computer software product may be stored in a storage medium such as a ROM/RAM, a magnetic disk, or an optical disk, and include several instructions for instructing a computer device, which may be a personal computer, a server, or a network device, to perform the methods described in the embodiments of the present invention or in some parts of the embodiments of the present invention.

The foregoing embodiments are not intended to limit the present invention. For persons of ordinary skill in the art, any modification, equivalent replacement, and improvement made without departing from the claims of the present invention shall fall within the protection scope of the present invention.

## Claims

1. A method for configuring a device, comprising:
Receiving (S110, S210, S310, S410) a configuration template sent by a configuration server, wherein the configuration template comprises a terminal device matching rule, configuration information corresponding to the terminal device matching rule, and a service configuration identifier corresponding to the terminal device matching rule;
Receiving (S120, S220, S320, S420) a device announcement message sent periodically by a terminal device, wherein the device announcement message carries terminal device information of the terminal device, and the terminal device information comprises first information identifying current service configuration of the terminal device;
based on the first information, determining (S230) that the terminal device needs to be configured; and
configuring (S130, S250, S360) the terminal device based on the configuration template and the first information;
wherein the determining that the terminal device needs to be configured comprises:
determining that the first information is null; or
determining that the first information is an initial configuration request identifier;
wherein the configuring the terminal device comprises:
based on the terminal device information and the terminal device matching rule, determining (S240) a first terminal device matching rule which is comprised in the terminal device matching rule and matches the terminal device;
sending (S250) first configuration information which is comprised in the configuration information and corresponds to the first terminal device matching rule to the terminal device; or,
wherein the determining that the terminal device needs to be configured comprises:
based on the terminal device information and the terminal device matching rule, determining (S340) a first terminal device matching rule which is comprised in the terminal device matching rule and matches the terminal device;
determining (S350) that a first service configuration identifier, in the service configuration identifier, corresponding to the first terminal device matching rule is inconsistent with the first information;
wherein the configuring the terminal device comprises:
sending (S360) first configuration information which is comprised in the configuration information and corresponds to the first terminal device matching rule to the terminal device.

2. The method according to claim 1, wherein the terminal device information further comprises:
at least one of second information identifying a capability of the terminal device, third information identifying a type of the terminal device, fourth information identifying a manufacturer of the terminal device, fifth information identifying a serial number of the terminal device, sixth information identifying software of the terminal device, or seventh information identifying hardware of the terminal device.

3. The method according to claim 1, wherein the determining a first terminal device matching rule which is comprised in the terminal device matching rule and matches the terminal device comprises:
Obtaining (S330) a port number of a port connected with the terminal device; and
according to the port number, the terminal device information, and the terminal device matching rule, determining (S340) the first terminal device matching rule which matches the terminal device.

4. The method according to claim 3, wherein the terminal device matching rule comprise:
a requirement for a capability of the terminal device;
wherein the terminal device matching rule further comprise:
at least one of a requirement for a port connected with the terminal device, a requirement for the type of the terminal device, a requirement for the manufacturer of the terminal device, a requirement for the serial number of the terminal device, a requirement for the software of the terminal device, or a requirement for the hardware of the terminal device.

5. An apparatus for configuring a device, comprising:
a first receiving module (710, 810, 1210), adapted to receive a configuration template sent by a configuration server;
a second receiving inodule (720, 820, 1220), adapted to receive a device announcement message sent periodically by a terminal device, wherein the device announcement message carries terminal device information of the terminal device, and the terminal device information comprises first information identifying current service configuration of the terminal device; and
a configuring module (740, 840, 1230), adapted to configure the terminal device based on the configuration template and the first information,
wherein the apparatus further comprises:
a determining module (730), adapted to determine that the terminal device needs to be configured;
wherein the determining module comprises:
a first determining unit (731), adapted to determine that the first information is null; or
a second determining unit (732), adapted to determine that the first information is an initial configuration request identifier,
wherein the configuring module (740)comprises:
a third determining unit (741), adapted to determine, based on the terminal device information and the configuration template, a first terminal device matching rule which is comprised in the configuration template and matches the terminal device;
a first sending unit (742), adapted to send first configuration information which is comprised in the configuration template and corresponds to the first terminal device matching rule to the terminal device; or,
wherein the determining module (830) comprises:
a fourth determining unit (831), adapted to determine, based on the terminal device information and the configuration template, a first terminal device matching rule which is comprised in the configuration template and matches the terminal device; and
a fifth determining unit (832), adapted to determine that a first service configuration identifier which is comprised in the configuration template and corresponds to the first terminal device matching rule is inconsistent with the first information;
wherein, the configuring module (840) comprises:
a second sending unit (841), adapted to send first configuration information which is comprised in the configuration template and corresponds to the first terminal device matching rule to the terminal device.

6. The apparatus according to claim 5, wherein the third determining unit (741) and the fourth determining unit (831) comprise:
an obtaining subunit (7411,8311), adapted to obtain a port number of a port connected with the terminal device; and
a determining subunit (7412,8312), adapted to determine, based on the port number, the terminal device information, and the configuration template, a first terminal device matching rule which is comprised in the configuration template and matches the terminal device.

7. The apparatus according to claim 5, wherein the apparatus further comprises:
a sending module (850), adapted to send a first service configuration identifier which is comprised in the configuration template and corresponds to the terminal device to the terminal device after the configuring module configures the terminal device.

## Patentansprüche

1. Verfahren zum Konfigurieren eines Geräts, das die folgenden Schritte aufweist:
Empfangen (S110, S210, S310, S410) einer Konfigurationsvorlage, die durch einen Konfigurationsserver gesendet wird, wobei die Konfigurationsvorlage eine Endgeräteanpassungsregel, Konfigurationsinformationen, die der Endgeräteanpassungsregel entsprechen, und eine Dienstkonfigurationskennung aufweist, die der Endgeräteanpassungsregel entspricht;
Empfangen (S120, S220, S320, S420) einer Geräteanmeldungsnachricht, die periodisch durch ein Endgerät gesendet wird, wobei die Geräteanmeldungsnachricht Endgeräteinformationen des Endgeräts befördert und die Endgeräteinformationen erste Informationen aufweisen, die eine gegenwärtige Dienstkonfiguration des Endgeräts identifizieren;
beruhend auf den ersten Informationen, Feststellen (S230), dass das Endgerät konfiguriert werden muss; und
Konfigurieren (S130, S250, S360) des Endgeräts beruhend auf der Konfigurationsvorlage und den ersten Informationen;
wobei das Feststellen, dass das Endgerät konfiguriert werden muss, aufweist:
Feststellen, dass die ersten Informationen nicht vorhanden sind; oder
Feststellen, dass die ersten Informationen eine Anfangskonfigurations-Anforderungskennung sind;
wobei das Konfigurieren des Endgeräts aufweist:
beruhend auf den Endgeräteinformationen und der Endgeräteanpassungsregel, Feststellen (S240) einer ersten Endgeräteanpassungsregel, die in der Endgeräteanpassungsregel enthalten ist und zum Endgerät passt;
Senden (S250) von ersten Konfigurationsinformationen, die in den Konfigurationsinformationen enthalten sind und der ersten Endgeräteanpassungsregel entsprechen, an das Endgerät; oder
wobei das Feststellen, dass das Endgerät konfiguriert werden muss, aufweist:
beruhend auf den Endgeräteinformationen und der Endgeräteanpassungsregel, Feststellen (S340) einer ersten Endgeräteanpassungsregel, die in der Endgeräteanpassungsregel enthalten ist und zum Endgerät passt;
Feststellen (S350), dass eine erste Dienstkonfigurationskennung in der Dienstkonfigurationskennung, die der ersten Endgeräteanpassungsregel entspricht, nicht mit den ersten Informationen zu vereinbaren ist;
wobei das Konfigurieren des Endgeräts aufweist:
Senden (S360) von ersten Konfigurationsinformationen, die in den Konfigurationsinformationen enthalten sind und die der ersten Endgeräteanpassungsregel entsprechen, an das Endgerät.

2. Verfahren nach Anspruch 1, wobei die Endgeräteinformationen ferner aufweisen:
zweite Informationen, die eine Fähigkeit des Endgeräts identifizieren, und/oder dritte Informationen, die einen Typ des Endgeräts identifizieren, und/oder vierte Informationen, die einen Hersteller des Endgeräts identifizieren, und/oder fünfte Informationen, die eine Seriennummer des Endgeräts identifizieren, und/oder sechste Informationen, die eine Software des Endgeräts identifizieren, und/oder siebte Informationen, die eine Hardware des Endgeräts identifizieren.

3. Verfahren nach Anspruch 1, wobei das Feststellen einer ersten Endgeräteanpassungsregel, die in der Endgeräteanpassungsregel enthalten ist und zum Endgerät passt, aufweist:
Beschaffen (S330) einer Portnummer eines Ports, der mit dem Endgerät verbunden ist; und
entsprechend der Portnummer, den Endgeräteinformationen und der Endgeräteanpassungsregel Feststellen (S340) der ersten Endgeräteanpassungsregel, die zum Endgerät passt.

4. Verfahren nach Anspruch 3, wobei die Endgeräteanpassungsregel aufweist:
eine Anforderung an eine Fähigkeit des Endgeräts;
wobei die Endgeräteanpassungsregel ferner aufweist:
eine Anforderung an einen Port, der mit dem Endgerät verbunden ist, und/oder eine Anforderung an den Typ des Endgeräts und/oder eine Anforderung an den Hersteller des Endgeräts und/oder eine Anforderung an die Seriennummer des Endgeräts und/oder eine Anforderung an die Software des Endgeräts und/oder eine Anforderung an die Hardware des Endgeräts.

5. Vorrichtung zur Konfiguration eines Geräts, die Folgendes aufweist:
ein erstes Empfangsmodul (710, 810, 1210), das eingerichtet ist, eine Konfigurationsvorlage zu empfangen, die durch einen Konfigurationsserver gesendet wird;
ein zweites Empfangsmodul (720, 820, 1220), das eingerichtet ist, eine Geräteanmeldungsnachricht zu empfangen, die periodisch durch ein Endgerät gesendet wird, wobei die Geräteanmeldungsnachricht Endgeräteinformationen des Endgeräts befördert und die Endgeräteinformationen erste Informationen aufweisen, die eine gegenwärtige Dienstkonfiguration des Endgeräts identifizieren; und
ein Konfigurationsmodul (740, 840, 1230), das eingerichtet ist, das Endgerät beruhend auf der Konfigurationsvorlage und den ersten Informationen zu konfigurieren,
wobei die Vorrichtung ferner aufweist:
ein Feststellungsmodul (730), das eingerichtet ist, festzustellen, dass das Endgerät konfiguriert werden muss;
wobei das Feststellungsmodul aufweist:
eine erste Feststellungseinheit (731), die eingerichtet ist, festzustellen, dass die ersten Informationen nicht vorhanden sind; oder
eine zweite Feststellungseinheit (732), die eingerichtet ist, festzustellen, dass die ersten Informationen eine Anfangskonfigurations-Anforderungskennung sind,
wobei das Konfigurationsmodul (740) aufweist:
eine dritte Feststellungseinheit (741), die eingerichtet ist, beruhend auf den Endgeräteinformationen und der Konfigurationsvorlage eine erste Endgeräteanpassungsregel festzustellen, die in der Konfigurationsvorlage enthalten ist und zum Endgerät passt;
eine erste Sendeeinheit (742), die eingerichtet ist, erste Konfigurationsinformationen, die in der Konfigurationsvorlage enthalten sind und der ersten Endgeräteanpassungsregel entsprechen, an das Endgerät zu senden; oder
wobei das Feststellungsmodul (830) aufweist:
eine vierte Feststellungseinheit (831), die eingerichtet ist, beruhend auf den Endgeräteinformationen und der Konfigurationsvorlage eine erste Endgeräteanpassungsregel festzustellen, die in der Konfigurationsvorlage enthalten ist und zum Endgerät passt; und
eine fünfte Feststellungseinheit (832), die eingerichtet ist, festzustellen, dass eine erste Dienstkonfigurationskennung, die in der Konfigurationsvorlage enthalten ist und
der ersten Endgeräteanpassungsregel entspricht, nicht mit den ersten Informationen zu vereinbaren ist;
wobei des Konfigurationsmodul (840) aufweist:
eine zweite Sendeeinheit (841), die eingerichtet ist, erste Konfigurationsinformationen, die in der Konfigurationsvorlage enthalten sind und der ersten Endgeräteanpassungsregel entsprechen, an das Endgerät zu senden.

6. Vorrichtung nach Anspruch 5, wobei die dritte Feststellungseinheit (741) und die vierte Feststellungseinheit (831) aufweisen:
eine Beschaffungsuntereinheit (7411, 8311), die eingerichtet ist, eine Portnummer eines Ports zu beschaffen, der mit dem Endgerät verbunden ist; und
eine Feststellungsuntereinheit (7412, 8312), die eingerichtet ist, beruhend auf der Portnummer, den Endgeräteinformationen und der Konfigurationsvorlage eine erste Endgeräteanpassungsregel festzustellen, die in der Konfigurationsvorlage enthalten ist und zum Endgerät passt.

7. Vorrichtung nach Anspruch 5, wobei die Vorrichtung ferner aufweist:
ein Sendemodul (850), das eingerichtet ist, eine erste Dienstkonfigurationskennung, die in der Konfigurationsvorlage enthalten ist und dem Endgerät entspricht, an das Endgerät zu senden, nachdem das Konfigurationsmodul das Endgerät konfiguriert.

## Revendications

1. Procédé pour configurer un dispositif, comprenant les étapes suivantes :
recevoir (S110, S210, S310, S410) un modèle de configuration envoyé par un serveur de configuration, où le modèle de configuration comprend une règle de correspondance de dispositif terminal, des informations de configuration correspondant à la règle de correspondance de dispositif terminal, et un identifiant de configuration de service correspondant à la règle de correspondance de dispositif terminal ;
recevoir (S120, S220, S320, S420) un message d'annonce de dispositif envoyé périodiquement par un dispositif terminal, où le message d'annonce de dispositif achemine des informations de dispositif terminal du dispositif terminal, et les informations de dispositif terminal comprennent des premières informations identifiant la configuration de service en cours du dispositif terminal ;
sur la base des premières informations, déterminer (S230) que le dispositif terminal doit être configuré ; et
configurer (S130, S250, S360) le dispositif terminal sur la base du modèle de configuration et des premières informations ;
où la détermination que le dispositif terminal doit être configuré comprend les étapes suivantes :
déterminer que les premières informations sont nulles ; ou
déterminer que les premières informations sont un identifiant de demande de configuration initiale ;
où la configuration du dispositif terminal comprend les étapes suivantes :
sur la base des informations de dispositif terminal et de la règle de correspondance de dispositif terminal, déterminer (S240) une première règle de correspondance de dispositif terminal qui est comprise dans la règle de correspondance de dispositif terminal et qui correspond au dispositif terminal ;
envoyer (S250) des premières informations de configuration, qui sont comprises dans les informations de configuration et qui correspondent à la première règle de correspondance de dispositif terminal, au dispositif terminal ; ou
où la détermination que le dispositif terminal doit être configuré comprend les étapes suivantes :
sur la base des informations de dispositif terminal et de la règle de correspondance de dispositif terminal, déterminer (S340) une première règle de correspondance de dispositif terminal qui est comprise dans la règle de correspondance de dispositif terminal et qui correspond au dispositif terminal ;
déterminer (S350) qu'un premier identifiant de configuration de service, dans l'identifiant de configuration de service, correspondant à la première règle de correspondance de dispositif terminal, est incohérent avec les premières informations ;
où la configuration du dispositif terminal comprend l'étape suivante :
envoyer (S360) des premières informations de configuration, qui sont comprises dans les informations de configuration et qui correspondent à la première règle de correspondance de dispositif terminal, au dispositif terminal.

2. Procédé selon la revendication 1, dans lequel les informations de dispositif terminal comprennent en outre :
au moins des informations parmi des deuxièmes informations identifiant une capacité du dispositif terminal, des troisièmes informations identifiant un type du dispositif terminal, des quatrièmes informations identifiant un fabricant du dispositif terminal,
des cinquièmes informations identifiant un numéro de série du dispositif terminal, des sixièmes informations identifiant un logiciel du dispositif terminal, ou des septièmes informations identifiant un matériel du dispositif terminal.

3. Procédé selon la revendication 1, dans lequel la détermination d'une première règle de correspondance de dispositif terminal qui est comprise dans la règle de correspondance de dispositif terminal et qui correspond au dispositif terminal comprend les étapes suivantes :
obtenir (S330) un numéro de port d'un port connecté au dispositif terminal ; et
selon le numéro de port, les informations de dispositif terminal, et la règle de correspondance de dispositif terminal, déterminer (S340) la première règle de correspondance de dispositif terminal qui correspond au dispositif terminal.

4. Procédé selon la revendication 3, dans lequel la règle de correspondance de dispositif terminal comprend :
une exigence pour une capacité du dispositif terminal ;
où la règle de correspondance de dispositif terminal comprend en outre :
au moins une exigence parmi une exigence pour un port connecté au dispositif terminal, une exigence pour le type du dispositif terminal, une exigence pour le fabricant du dispositif terminal, une exigence pour le numéro de série du dispositif terminal, une exigence pour le logiciel du dispositif terminal ou une exigence pour le matériel du dispositif terminal.

5. Appareil pour configurer un dispositif, comprenant :
un premier module de réception (710, 810, 1210) conçu pour recevoir un modèle de configuration envoyé par un serveur de configuration ;
un deuxième module de réception (720, 820, 1220) conçu pour recevoir un message d'annonce de dispositif envoyé périodiquement par un dispositif terminal, où le message d'annonce de dispositif achemine des informations de dispositif terminal du dispositif terminal, et les informations de dispositif terminal comprennent des premières informations identifiant la configuration de service en cours du dispositif terminal ; et
un module de configuration (740, 840, 1230) conçu pour configurer le dispositif terminal sur la base du modèle de configuration et des premières informations,
où l'appareil comprend en outre :
un module de détermination (730), conçu pour déterminer que le dispositif terminal doit être configuré ;
où le module de détermination comprend :
une première unité de détermination (731), conçue pour déterminer que les premières informations sont nulles ; ou
une deuxième unité de détermination (732), conçue pour déterminer que les premières informations sont un identifiant de demande de configuration initiale,
où le module de configuration (740) comprend :
une troisième unité de détermination (741), conçue pour déterminer, sur la base des informations de dispositif terminal et du modèle de configuration, une première règle de correspondance de dispositif terminal qui est comprise dans le modèle de configuration et qui correspond au dispositif terminal ;
une première unité d'envoi (742), conçue pour envoyer des premières informations de configuration, qui sont comprises dans le modèle de configuration et qui correspondent à la première règle de correspondance de dispositif terminal, au dispositif terminal ; ou
où le module de détermination (830) comprend :
une quatrième unité de détermination (831), conçue pour déterminer, sur la base des informations de dispositif terminal et du modèle de configuration, une première règle de correspondance de dispositif terminal qui est comprise dans le modèle de configuration et qui correspond au dispositif terminal ; et
une cinquième unité de détermination (832), conçue pour déterminer qu'un premier identifiant de configuration de service qui est compris dans le modèle de configuration et qui correspond à la première règle de correspondance de dispositif terminal, est incohérent avec les premières informations ;
où le module de configuration (840) comprend :
une deuxième unité d'envoi (841), conçue pour envoyer des premières informations de configuration, qui sont comprises dans le modèle de configuration et qui correspondent à la première règle de correspondance de dispositif terminal, au dispositif terminal.

6. Appareil selon la revendication 5, dans lequel la troisième unité de détermination (741) et la quatrième unité de détermination (831) comprennent :
une sous-unité d'obtention (7411, 8311), conçue pour obtenir un numéro de port d'un port connecté au dispositif terminal ; et
une sous-unité de détermination (7412, 8312), conçue pour déterminer, sur la base du numéro de port, des informations de dispositif terminal, et du modèle de configuration, une première règle de correspondance de dispositif terminal qui est comprise dans le modèle de configuration et qui correspond au dispositif terminal.

7. Appareil selon la revendication 5, dans lequel l'appareil comprend en outre :
un module d'envoi (850), conçu pour envoyer un premier identifiant de configuration de service, qui est compris dans le modèle de configuration et qui correspond au dispositif terminal, au dispositif terminal après que le module de configuration a configuré le dispositif terminal.
